**Europäisches Patentamt**

**European Patent Office**

**Office européen des brevets**

(19)

(11) Veröffentlichungsnummer: **0 166 210 B1**

(12) **EUROPÄISCHE PATENTSCHRIFT**

(45) Veröffentlichungstag der Patentschrift: **21.11.91**

(51) Int. Cl.5: **G11B 5/024**, G11B 5/127

(21) Anmeldenummer: **85106339.6**

(22) Anmeldetag: **23.05.85**

(54) **Loeschverfahren.**

(30) Priorität: **25.06.84 CH 3053/84**

(43) Veröffentlichungstag der Anmeldung:
**02.01.86 Patentblatt 86/01**

(45) Bekanntmachung des Hinweises auf die
Patenterteilung:
**21.11.91 Patentblatt 91/47**

(84) Benannte Vertragsstaaten:
**AT BE CH DE FR GB IT LI NL SE**

(56) Entgegenhaltungen:
**EP-A- 0 115 197**
**DE-A- 1 774 501**
**DE-A- 2 906 441**
**GB-A- 2 050 038**
**GB-A- 2 091 475**

**PATENT ABSTRACTS OF JAPAN, Band 7, Nr.
172 (P-213)[1317], 29. Juli 1983; & JP - A - 58
77013 (NIPPON VICTOR) 10.05.1983**

**PATENT ABSTRACTS OF JAPAN, Band 8, Nr.
141 (P-283)[1578], 30. Juni 1984; & JP - A - 59
40303 (SONY) 06.03.1984**

(73) Patentinhaber: **STUDER REVOX AG
Althardstrasse 30
CH-8105 Regensdorf ZH(CH)**

(72) Erfinder: **Zwicky, Paul
Channelstrasse 4
CH-8157 Dielsdorf ZH(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Loeschen von magnetischen Aufzeichnungen auf einem Magnetband, die Wellenlaengen aufweisen, die in einem Bereich zwischen einer kuerzesten und einer laengsten Wellenlaenge liegen, durch Ueberschreiben mit einem hoeherfrequenten magnetischen Wechselfeld mit gekruemmten Feldlinien, durch welches das Magnetband mit den Aufzeichnungen in einer Richtung hindurch bewegt wird, wobei ueber eine erste Laenge, auf der das magnetische Wechselfeld in der Richtung an Staerke zunimmt, ein weiteres Wechselfeld, das durch die bewegten Aufzeichnungen erzeugt wird, auf das magnetische Wechselfeld ueberlagert wird und ueber eine zweite Laenge einer Aufzeichnungszone, auf der das magnetische Wechselfeld in der Richtung abnimmt, das magnetische Wechselfeld mit dem ueberlagerten weiteren Wechselfeld zu Aufzeichnungen auf dem Magnetband umgewandelt wird.

Ein solches Verfahren kann beispielsweise mit einem Magnetkopf durchgefuehrt werden, wie er aus Patent Abstracts of Japan, Bd. 7, Nr. 172, 29. Juli 1983, JP-A-58 077 013 bekannt ist. Demnach wird der Querschnitt des ersten Polschuhes kleiner ausgefuehrt als der Querschnitt des zweiten Polschuhes. Damit wird ueber dem ersten Polschuh eine hoehere Feldliniendichte erreicht, welche den Loeschvorgang verbessern soll.

Bei diesem bekannten Magnetkopf, ist nur das Verhaeltnis der Querschnitte der beiden Polschuhe definiert. Dies geschieht ohne auf die Wellenlaengen der zu loeschenden Aufzeichnungen Ruecksicht zu nehmen. Dadurch wird nur fuer zwei begrenzte Frequenzbereiche in der Aufzeichnung eine verbesserte Loeschdaempfung erreicht, naemlich fuer Wellenlaengen, die kuerzer sind als die Aufzeichnungszone auf dem kurzen Polschuh und fuer Wellenlaengen, die viel laenger sind als die Laenge des laengeren Polschuhs.

Die Erfindung wie sie in den Anspruechen gekennzeichnet ist, loest die Aufgabe, ein Loeschverfahren zu schaffen, das eine verbesserte Loeschwirkung fuer alle Frequenzen, vor allem auch fuer tiefe Frequenzen, ergibt.

Die durch die Erfindung erreichten Vorteile sind insbesondere darin zu sehen, dass die Loeschdaempfung oder Loeschwirkung gezielt auf die Wellenlaenge der Information abgestimmt werden kann. Insbesondere koennen damit auch Luecken der Loeschwirkung, die beim Uebergang von hohen zu tiefen Frequenzen auftreten, vermieden werden. Zudem kann somit auf die Verwendung eines zweiten Loeschkopfes verzichtet werden. Ein weiterer Vorteil besteht darin, dass die Erregungsleistung, die zur Erzeugung eines genuegenden hochfrequenten Wechselfeldes ueber dem Loeschkopf benoetigt wird, geringer ist. Bei der Durchfuehrung des erfindungsgemaessen Loeschverfahrens genuegt damit ein Loeschkopf mit einem einzigen Loeschspalt, um eine sehr gute Loeschdaempfung von z.B. 85 dB fuer Frequenzen bis hinunter zu ca. 100 Hz bei 38 cm/sec Magnetbandgeschwindigkeit zu erreichen. Es laesst sich damit auch ein kleiner, leichter und billiger Loeschkopf verwenden, der nur einen einzigen Loeschspalt aufweist. Dies ergibt auch eine schaerfere Trennung zwischen aufgezeichneten und geloeschten Informationen auf einem Magnetband. Somit wird ein praeziserer elektronischer Schnitt ermoeglicht.

Im folgenden wird die Erfindung anhand von lediglich einen Ausführungsweg darstellenden Zeichnungen näher erläutert.

Es zeigen

Figur 1 in schematischer Darstellung einen erfindungsgemässen Löschkopf mit einem Löschspalt,

Figur 2 einen Löschkopf gemäss dem Stand der Technik.

Figur 3 einen Löschkopf mit zwei Löschspalten und

Figur 4 und 5 je einen Teil eines weiteren Löschkopfes.

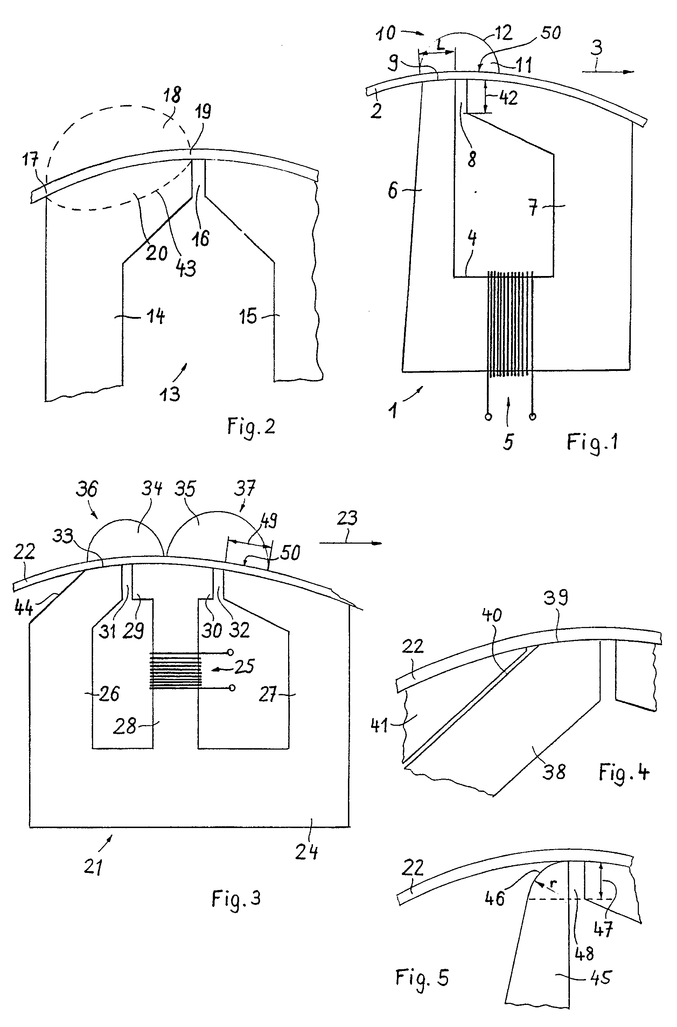

Figur 1 zeigt einen Magnetkopf 1, an dem mit Hilfe an sich bekannter und deshalb nicht näher dargestellter Mittel ein Magnetband 2 in Richtung eines Pfeiles 3 vorbeibewegt wird. Der Magnetkopf 1 besteht im wesentlichen aus einem Kern 4 aus weichmagnetischem Material sowie aus einer den Kern 4 umschlingenden Spule 5. Der Kern 4 weist einen ersten und einen weiteren Polschuh 6 und 7 auf, die durch einen Löschspalt 8 voneinander getrennt sind.

Am ersten Polschuh wird eine Stirnfläche 9 durch das Magnetband 2 bestrichen. Ueber dem Löschspalt 8 und den Polschuhen 6 und 7 erstreckt sich ein Magnetfeld 10, insbesondere als magnetisches Wechselfeld. In einem Bereich 11 des Magnetfeldes 10, der durch eine Feldlinie 12 diesen nach aussen begrenzt, ist das Magnetfeld stark genug, um die auf dem Magnetband 2 aufgezeichneten Informationen zu löschen. Beim ersten Polschuh 6 ist die Länge L seiner Stirnfläche 9 von Bedeutung.

Figur 2 zeigt einen Teil eines Magnetkopfes 13, wie er dem Stand der Technik entspricht. Er weist einen ersten Polschuh 14 und einen zweiten Polschuh 15, die durch einen Spalt 16 getrennt sind, auf. Das Magnetband 2 enthalte dabei eine Aufzeichnung, deren Wellenlänge so bemessen ist, dass eine Halbwelle an der Stelle 17 beginnt und an der Stelle 19 endet.

Der daraus resultierende Streufluss ist ausserhalb des Polschuhes 14 mit 18, innerhalb mit 20 bezeichnet. Der Streufluss 20 bewirkt im ersten Polschuh 14 zwischen den Stellen 17 und 18, längs einer Feldlinie 43, eine Spannungsdifferenz. Die grössten Spannungsdifferenzen werden von Aufzeichnungen bewirkt, deren Frequenz einer halben Wellenlänge $\lambda/2$ entspricht, die etwa gleich dem Abstand bzw. der Länge des Magnetbandes 2 zwischen den Stellen 17 und 18 oder den äusseren Begrenzungen des ersten Polschuhes 14, ist. Diese Wellenlänge $\lambda$ wird im folgenden als Grenzwellenlänge $\lambda_g$ bezeichnet. Dies bedeutet, dass Aufzeichnungen, welche eine Wellenlänge $\lambda_g$ aufweisen, im ersten Polschuh eine Spannungsdifferenz bilden, die sich wie die Aufzeichnung auch zeitlich ändert und ein weiteres magnetisches Wechselfeld erzeugt, das sich im Kern und im zweiten Polschuh 15 ausbreitet, sich dem magnetischen Wechselfeld über dem Spalt 16 überlagert und im Magnetband 2 eine Aufzeichnung dieser Signale über den zweiten Polschuh 15 bewirkt.

Figur 3 zeigt einen Magnetkopf 21 an dem ein Magnetband 22 in Richtung eines Pfeiles 23 vorbeibewegt wird. Der Magnetkopf 21 besteht im wesentlichen aus einem Kern 24 aus weichmagnetischem Material sowie aus einer diesen umschlingenden Spule 25. Der Kern 24 weist zwischen einem ersten und einem weiteren Polschuh 26 und 27 einen Steg 28 mit zwei weiteren Polschuhen 29 und 30 auf. Zwischen den Polschuhen 26 und 29 sowie 27 und 30 ergeben sich zwei Löschspalte 31 und 32. Der erste Polschuh 26 weist ebenfalls eine vom Magnetband 22 bestrichene Stirnflaeche 33 auf.

Ueber den Spalten 31 und 32 erstreckt sich je ein Bereich 34 und 35 eines Magnetfeldes 36 und 37 entsprechend dem Bereich 11 des Magnetfeldes 10 gemaess Figur 1. Eine Flaeche 44 erstreckt sich in Richtung des Pfeiles 23 gesehen vor der Stirnflaeche 33 des ersten Polschuhes 26 und ist dem Magnetband 22 zugewandt.

Figur 4 zeigt einen Teil eines Magnetkopfes, dessen erster Polschuh 38 gegen die Richtung 23 der Bewegung des Magnetbandes 22 gesehen eine Stirnflaeche 39 und eine weitere Flaeche 40 als aeussere Begrenzung aufweist. Zwischen der Flaeche 40 und dem Magnetband 22 ist eine Abschirmung 41 angeordnet.

Figur 5 zeigt einen Teil eines weiteren Magnetkopfes, dessen erster Polschuh 45 eine bogenfoermige Stirnflaeche 46 aufweist, dessen Radius r etwa der Tiefe 47 des Loeschspaltes 48 entspricht.

Die Durchführung des erfindungsgemaessen Verfahrens hat, nachdem eine Grenzwellenlaenge $\lambda_g$ einmal feststeht, so zu erfolgen, dass der erste Polschuh 6 des Magnetkopfes so ausgebildet wird, dass Aufzeichnungen mit laengerer Wellenlaenge als die Grenzwellenlaenge $\lambda_g$ nicht in den ersten Polschuh aufgenommen werden. Damit wird ueber dem Spalt und im Kern auch kein weiteres Wechselfeld erzeugt, das im weiteren Polschuh 7, 27 aufgezeichnet werden koennte. Das kann beispielsweise dadurch erreicht werden, dass die Stirnflaeche 9, 33 oder 39 des ersten Polschuhes 6, 26 oder 38, die vom Magnetband 2 oder 22 bestrichen wird kuerzer als die halbe Grenzwellenlaenge $\lambda_g/2$ ausgebildet wird. Wird die Laenge dieser Stirnflaeche 9, 33 oder 39 mit L bezeichnet, so soll, um zu vermeiden, dass Aufzeichnungen mit kuerzeren Wellenlaengen als die Grenzwellenlaenge $\lambda_g$ aufgezeichnet werden, die Laenge 49 einer Aufzeichnungszone 50 ueber dem weiteren Polschuh 27 nicht kleiner sein als diese Laenge L. Als Aufzeichnungszone 50 bezeichnet man in diesem Falle jenen Bereich des weiteren Polschuhes 27, der im Bereich 35 des Magnetfeldes 37 liegt. Darin werden Aufzeichnungen mit kuerzeren Wellenlaengen als die Laenge der Aufzeichnungszone 50 auf jeden Fall geloescht. Auf diese Weise gelangen keine Signale mit einer Wellenlaenge groesser als $\lambda_g$ in den weiteren Polschuh und signale mit kuerzeren Wellenlaengen als $\lambda_g$ werden alle geloescht. Dasselbe gilt sinngemaess auch fuer Ausfuehrungen mit einem einzigen Loeschspalt.

Eine weitere Moeglichkeit besteht darin, dem ersten Polschuh 6, 26 im Bereiche der Stirnflaeche 9, 33 und der Flaeche 36 durch Wahl eines geeigneten Materials eine sehr hohe Permeabilitaet zu verleihen.

Um die genannte Wiederaufzeichnung am weiteren Polschuh 7, 27 zu verhindern, kann der magnetische Widerstand des Loeschspaltes 8, 32 durch bekannte Mittel moeglichst gross gewaehlt werden. Dadurch wird der magnetische Fluss im weiteren Polschuh 7, 27 verkleinert.

Allgemein ist es vorteilaft, den Querschnitt des ersten Polschuhes 6, 26 gerade so gross zu dimensionieren als es die Feldliniendichte im Material zulässt. Vorzugsweise entspricht in diesem Fall die Länge L der Stirnfläche 9, 33, 39 der Spalttiefe 42. Ebenso dient die Ausführung gemäss Figur 4 mit der Abschirmung 41 dem nun bekannten Ziel.

Es ist leicht möglich, durch einen Versuch die Verbesserung der Löschdämpfung eines gegebenen Magnetkopfes nachzuprüfen. Dazu muss am gegebenen Magnetkopf der erste Polschuh nur verkleinert werden so, dass das Magnetband weniger Auflagefläche erhält. Dies kann durch eine Anschrägung des ersten Polschuhes erfolgen, so dass eine Fläche 40, 44 (Fig. 3, 4) entsteht und so die Stirnfläche des ersten Polschuhes verkleinert wird. Vorzugsweise soll diese Anschrägung einen Winkel $\alpha$ mit dem Magnetband einschliessen, der grösser ist als 30°. Auf diese Weise kann ab einer der Länge der restlichen Stirnfläche entsprechenden Grenzwellenlänge $\lambda_g$ verbesserte Löschdämpfung nachgewiesen werden.

## Patentansprüche

1. Verfahren zum Loeschen von magnetischen Aufzeichnungen auf einem Magnetband, die Wellenlaengen aufweisen,

die in einem Bereich zwischen einer kuerzesten und einer laengsten Wellenlaenge liegen,

durch Ueberschreiben mit einem hoeherfrequenten magnetischen Wechselfeld (10, 36, 37) mit gekruemmten Feldlinien (12), durch welches das Magnetband mit den Aufzeichnungen in einer vorbestimmten Richtung (3) hindurch bewegt wird,

wobei ueber eine erste Laenge (L) auf der das magnetische Wechselfeld in der vorbestimmten Richtung (3) an Staerke zunimmt, ein weiteres Wechselfeld, das durch die bewegten Aufzeichnungen erzeugt wird, auf das magnetische Wechselfeld (10, 36, 37) ueberlagert wird, und

ueber eine zweite Laenge (49) einer Aufzeichnungszone (50), auf der das magnetische Wechselfeld in der vorbestimmten Richtung (3) abnimmt, das magnetische Wechselfeld mit dem ueberlagerten weiteren Wechselfeld zu Aufzeichnungen auf dem Magnetband umgewandelt wird, dadurch gekennzeichnet, dass

eine Grenzwellenlaenge ($\lambda_g$) innerhalb des genannten Bereiches der Wellenlaengen so gewaehlt wird, dass die Grenzwellenlaenge kuerzere Wellenlaengen der Aufzeichnung gegen laengere Wellenlaengen abgrenzt, die mit staerkerer Loeschdaempfung geloescht werden sollen, dass

die erste Laenge (L) kuerzer gewaehlt wird als die halbe Grenzwellenlaenge ($\lambda_g/2$) und dass

das magnetische Wechselfeld so gestaltet wird, dass die zweite Laenge (49) der Aufzeichnungszone (50) groesser wird als die halbe Grenzwellenlaenge.

2. Verfahren nach Anspruch 1, dadurch gekennzeichnet, dass die Grenzwellenlaenge dadurch bestimmt wird, dass ein Magnetkopf (1) verwendet wird, bei dem an einem ersten Polschuh (6, 26) eine Stirnflaeche (9, 33) mit einer Laenge (L) vorgesehen wird, die kleiner ist als die halbe Grenzwellenlaenge ($\lambda_g/2$).

3. Verfahren nach Anspruch 2, dadurch gekennzeichnet, dass eine Stirnflaeche (46) eines ersten Polschuhes (45) bogenfoermig ausgebildet wird.

4. Verfahren nach Anspruch 2, dadurch gekennzeichnet, dass am verwendeten Magnetkopfe ein Loeschspalt (8) mit einer solchen Tiefe (42) vorgesehen wird, die der Laenge (L) entspricht.

5. Verfahren nach Anspruch 2, dadurch gekennzeichnet, dass der erste Polschuh eines Magnetkopfes so gestaltet wird, dass er eine Stirnflaeche (39) aufweist, die am Magnetband anliegt und dass er eine weitere Flaeche (40) gegen die Richtung (23) gesehen anschliessend aufweist, die gegen die Stirnflaeche (39) geneigt ist.

6. Verfahren nach Anspruch 2, dadurch gekennzeichnet, dass die zweite Laenge (49) an einem weiteren Polschuh des verwendeten Magnetkopfes vorgesehen wird.

7. Verfahren nach Anspruch 3, dadurch gekennzeichnet, dass am verwendeten Magnetkopf ein Radius (r) einer Stirnflaeche (46) der Tiefe (47) des Loeschspaltes (48) entsprechend ausgebildet wird.

8. Verfahren nach Anspruch 2, dadurch gekennzeichnet, dass das magnetische Wechselfeld durch entsprechend starke Erregung im Magnetkopf an einem weiteren Polschuh so weit ausgedehnt wird, dass die zweite Laenge (49) groesser wird als die halbe Grenzwellenlaenge.

9. Verfahren nach Anspruch 5, dadurch gekennzeichnet, dass die weitere Flaeche (40) von einer Abschirmung (41) gegen das Magnetband (22) abgedeckt wird.

## Claims

1. Method for erasing magnetic recordings on a magnetic tape, whereas said recordings comprise wave lengths within a range limited by a shortest and a longest wave length, whereas erasing takes place by recording a higher frequency alternating magnetic field (10, 36, 37) having arcuated field lines (12) and through which the magnetic tape containing the recordings is moved in a predetermined direction (3), whereas an additional alternating field produced by the recordings moved with the tape are superimposed on the alternating magnetic field (10, 36, 37) over a length (L), over which the alternating magnetic field increases in the direction (3) and whereas the alternating magnetic field and the additional field are converted into recordings on the magnetic tape over a second length (49) of a recording zone (50) over which the alternating magnetic field decreases in the predetermined direction (3), characterised in that a wave length limit ($\lambda g$) is

chosen lying within said range of wave lengths in such a manner that it separates the shorter wave lengths of the recording from the longer wave lengths which are to be erased with increased attenuation, in that said first length (L) is made shorter than one half of the wave length limit (λg/2) and in that the alternating magnetic field is directed in such a way that said second length (49) of said recording zone (50) is bigger than said half of the wave length limit.

2. Method according to claim 1, characterised in that said wave length limit is chosen by taking a magnetic head (1) having a first pole part (6, 26) with a surface (9, 33) having a length (L) which is shorter than said half of the wave length limit (λg/2).

3. Method according to claim 2, characterised in that the surface (46) of a first pole part (45) is given a arcuate shape.

4. Method according to claim 2, characterised in that the erasing gap (8) of the magnetic head has a depth (42) corresponding to said length (L).

5. Method according to claim 2, characterised in that the first pole part of the magnetic head is designed having a surface (39) which is in contact with the magnetic tape and having another face (40) inclined with respect to said surface (39) and adjoining it when seen in the opposite direction of direction (23).

6. Method according to claim 2, characterised in that said second length (49) is located on an other pole part of the magnetic head.

7. Method according to claim 3, characterised in that a surface (46) of the magnetic head is curved with a radius (r) corresponding to the depth (47) of the erasing gap (48).

8. Method according to claim 2, characterised in that the alternating magnetic field present on another pole part is extended by increasing the excitation in the magnetic head in order to increase the second length (49) over the half of said wave length limit.

9. Method according to claim 5, characterised in that another face (40) is shielded against the magnetic tape by a shield (41).

**Revendications**

1. Méthode pour effacer des enregistrements magnétiques sur une bande magnétique où les enregistrements ont des longueurs d'ondes situées dans une plage limitée par la plus courte et la plus longue des longueurs d'ondes, où les enregistrements sont effacés en y surenregistrant un champ magnétique alternatif (10, 36, 37) ayant des lignes de champ (12) courbes et qui est traversé par la bande magnétique dans un sens (3) prédéterminé, où un autre champ alternatif produit par les enregistrements sur la bande qui défilent sur une première longueur (L) dans le champ magnétique alternatif où l'intensité augmente dans le sens (3) prédéterminé, est superposé au champ magnétique alternatif (10, 36, 37) et où, sur une seconde longueur (49) appartenant à une zone d'enregistrement (50) où l'intensité diminue dans le sens (3) prédéterminé, le champ magnétique alternatif et le l'autre champ superposé sont convertis en enregistrements sur la bande magnétique, caractérisée en ce que une longueur d'onde limite (λg) est choisie à l'intérieur de ladite plage de longueurs d'ondes de telle manière que la longueur d'onde limite sépare les ondes courtes de l'enregistrement des ondes longues devant être affaiblies plus fortement à l'effacement, en ce que la première longueur (L) est choisie plus courte que la la demi-longueur d'onde limite (λg/2) et en ce que la seconde longueur (49) de la zone d'enregistrement (50) est choisie plus longue que la demi-longueur d'onde limite.

2. Méthode selon la revendication 1, caractérisée en ce que la longueur d'onde limite est choisie en utilisant une tête magnétique (1) avec un premier pôle (6, 26) pourvu d'une surface (9, 33) d'une longueur (L) inférieure à la demi-longueur d'onde (λg/2)

3. Méthode selon la revendication 2, caractérisée en ce que la surface (46) du premier pôle (45) est courbée.

4. Méthode selon la revendication 2, caractérisée en ce que la tête utilisée est pourvue d'un entrefer d'effacement (8) d'une hauteur (42) qui correspond à la longueur (L).

5. Méthode selon la revendication 2, caractérisée en ce que le premier pôle d'une tête magnétique est formé ayant une surface (39) en contact avec la bande magnétique et ayant une autre face (40) inclinée par rapport à la surface (39) et précédant celle-ci vu dans le sens (23).

6. Méthode selon la revendication 2, caractérisée en ce que la seconde longueur (49) est prévue sur un autre pôle de la tête utilisée.

7. Méthode selon la revendication 3, caractérisée en ce que la surface (46) courbée de la tête magnétique utilisée a un rayon (r) qui correspond à la hauteur (47) de l'entrefer (48) d'effacement.

8. Méthode selon la revendication 2, caractérisée en ce que l'étendue du champ magnétique alternatif est augmenté par une excitation accrue dans la tête magnétique afin que la seconde longueur (49) sur l'autre pôle dépasse la demi-longueur d'onde limite.

9. Méthode selon la revendication 5, caractérisée en ce que l'autre face (40) est protégée du côté de la bande magnétique (22) par un bouclier (41).

EP 0 166 210 B1

Fig.1

Fig.2

Fig.3

Fig.4

Fig. 5

7